(19) Europäisches Patentamt
European Patent Office
Office européen des brevets

(11) **EP 1 694 312 B1**

(12) **EUROPEAN PATENT SPECIFICATION**

(45) Date of publication and mention
of the grant of the patent:
**07.05.2008 Bulletin 2008/19**

(51) Int Cl.:
*A61K 9/50* (2006.01)    *A61K 9/16* (2006.01)
*A61J 3/00* (2006.01)    *B01J 13/02* (2006.01)

(21) Application number: **04797148.6**

(22) Date of filing: **23.11.2004**

(86) International application number:
**PCT/BR2004/000231**

(87) International publication number:
**WO 2005/048995 (02.06.2005 Gazette 2005/22)**

(54) **IRON SALT COATED WITH ALGINATE AND METHOD FOR THE PREPARATION THEREOF**

MIT ALGINAT BESCHICHTETES EISENSALZ UND HERSTELLUNGSVERFAHREN DAFÜR

SEL DE FER REVETU D'ALGINATE ET PROCEDE DE PREPARATION ASSOCIE

(84) Designated Contracting States:
**AT BE BG CH CY CZ DE DK EE ES FI FR GB GR
HU IE IS IT LI LU MC NL PL PT RO SE SI SK TR**

(30) Priority: **24.11.2003 BR 0305871**

(43) Date of publication of application:
**30.08.2006 Bulletin 2006/35**

(73) Proprietors:
• **INSTITUTO DE PESQUISAS TECNOLOGICAS
DO ESTADO DE SAO PAULO S.A. IPT
Sao Paulo, SP 05508-901 (BR)**
• **FERMAVI ELETROQU MICA LTDA
01310-200 Sao Paulo (BR)**

(72) Inventors:
• **RE , Maria Inês
05508-901 Sao Paulo (BR)**
• **FERNANDES, Fernando César
05469-030 Sao Paulo (BR)**

(74) Representative: **Bredema
38, avenue de l'Opéra
75002 Paris (FR)**

(56) References cited:
**DE-A1- 10 205 872**      **US-A- 5 662 922**

**Description**

## FIELD OF THE INVENTION

The present patent is directed to a product which is a iron source to be used for the fortification of dehydrated food that keeps its sensorial properties stable while being stored and that is provided by forming an alginate film on particles of a salt containing bioavailable iron, such as ferrous sulphate, and the method for the preparation thereof.

## BACKGROUND OF THE INVENTION

The iron deficiency is one of the most relevant nutritional problems since it affects about 1/3 of the population all over the world. The anemia due to iron deficiency represents a problem of Public Health in the whole world, and it is known that children of up to 2 years of age and fertile women are the susceptible groups. In Brazil, its prevalence has remained around 40% of the population and the alimentary fortification has been the strategy recommended by the World Health Organization for fighting the metabolic and physiological upheavals caused by this lack.

The choice of the most suitable compound to fortify a food product should be based on a number of minimum requirements: it should be harmless and be easily absorbed by the human organism, have a good stability under fortified food storage conditions, and be produced by a safe and reproductive route, which the said choice also depending on the presence of activators or inhibitors in fortified food. The Fe compounds that can be used for fortifying food stuff are classified into three groups based on the solubility in water or acid mean: Group 1 — water-soluble compounds (ferrous sulphate, ferrous gluconate, ferrous lactate); Group 2 - hardly water-soluble compounds or diluted acid-soluble compounds (ferrous fumarate, ferrous succinate); Group 3 — water-insoluble compounds or hardly diluted acid-soluble compounds (ferric orthophosphate, ferric pyrophosphate, elemental iron).

Amongst the problems found when fortifying foodstuff with iron, the main one of them is the oxidation of $Fe^{+2}$ to $Fe^{+3}$ that reduces the bioavailability (amount of the ingested iron that is available for the metabolic process) and causes alterations in the sensorial properties of the fortified foodstuff, such as the color, flavor and odor.

Despite the fact that the inorganic ferrous sulphate salt is deemed to be the most easily absorbed and one of the cheapest forms, it is also more chemically reactive than the other forms, suffering the disadvantage that it causes changes in the color and flavor in the enriched foodstuff. Less reactive compounds, such as ferric pyrophosphate, ferric orthophosphate and elemental iron, have been used to fortify infantile cereals and flours because they do not cause any changes in the color and flavor of such food stuff, however they suffer the disadvantage of being poorly absorbed.

Basic relatively cheap food products, such as wheat flour, are good candidates to be fortified with iron, in order to reach the biggest number of classes of the population. As the iron compounds that can be used in this case, besides the bioavailability, amongst other important aspects that should be considered the following can be cited: (1) <u>Stability</u>: since the flours contain small amounts of fats, the addition of pro-oxidant iron compounds can speed up the development of rancidity — ferrous sulphate or fumarate are iron compounds that possess such characteristics and the incorporation of them in the flour can reduce its shelf life, a problem that is not found with elemental iron, that is poorly reactive, and (2) <u>Particle size and density</u>: the source of iron should possess such characteristics that match with the flour to be fortified in order not to cause any segregation in the mixture and not to change the appearance of the flour - among the ferrous sulphate forms, the heptahydrated one must be prevented for its crystals are bulky and can cause a negative influence on the homogenization of the mixture; on the other hand, the elemental iron, besides its low bioavailability, has a quite higher density than that of the flour, what induces a natural segregation of the product in the mixture.

The practice used to fortify wheat flour or similar products has been the use of compounds such as reduced iron, sodium iron pyrophosphate or ferric orthophosphate; however, the bioavailability of such compounds is questionable, requiring high levels in the fortification of food stuff to assure some absorption of iron by the organism.

In fact, the offer of iron compounds that have all the desirable characteristics for the fortification is quite rare: neither react nor affect the sensorial properties of the fortified food stuff, have a good absorption, assure a high bioavailability of iron to the organism and present a low trade cost.

Amongst the iron compounds, the most suited is the ferrous sulphate, due to its proven bioavailability in human beings. A comparative study of bioavailability in human beings with different commercial iron salts (ferrous sulphate, reduced iron, ferric phosphate) described by Cook et al. ("Absorption of fortification iron in bread ", American Journal of Clinical Nutrition 26, pages 861-872, 1973) shows that the ferrous sulphate is the iron compound having the highest bioavailability amongst those tested. However, the problem of the reactivity of this compound when incorporated into food stuff such as flour and the like, with a great risk for the stability of the fortified food stuff and changes in its sensorial properties such as color, odor and flavor.

The first alternative of using ferrous sulphate to fortify wheat flour that addresses this problem was presented by U.S. Patent No. 3,803,292, that discloses the fortification of flour by using a combined ferrous sulphate compound. Said compound is comprised of mono-hydrated ferrous sulphate particles coated by a hepta-hydrated ferrous sulphate layer that, according to this invention, has the advantage of combining the high bioavailability of ferrous sulphate with the stability of the fortified wheat flour that is assured by the hepta-hydrated ferrous sulphate layer. Stability test have been carried out, thus proving this effect, but no bioavailability result has been referred to therein.

Other compounds based on iron phosphate have been patented as compounds having a bioavailability comparable to that of the ferrous sulphate, with further advantages of a better stability when added to foodstuff (U.S. Patents No. 3,876,813 and No. 4,931,292), however no evidence of the bioavailability in human beings has been referred to therein. Thus, the question is to find a source of iron that can assure a high bioavailability of Fe in the human organism and a stability of the fortified product during its storage, at the same time, without changing the sensorial properties thereof.

## SUMMARY OF THE INVENTION

The present invention relates to an iron source product for fortifying dehydrated food stuff, characterized in that it comprises a bioavailable iron salt core, in special a mono-hydrated ferrous sulphate core, coated with at least an alginate layer.

The present invention presents a way to modify bioavailable iron salts, such as mono-hydrated ferrous sulphate ($FeSO_4.H_2O$) to address problems encountered when it is used in food stuff, and particularly in wheat flour and other cereals and food stuff prepared therefrom, such as bread, pasta and cakes, with the innovation of coating the ferrous sulphate particles with alginate, a natural polysaccharide extracted from seaweed that is easily gelled with divalent metal ions such as $CA^{+2}$ or $Fe^{+2}$ among others.

The technical effect of this innovation is the formation of an iron alginate film on the surface of iron sulphate particles, thus increasing the stability of the fortified foodstuff but not changing the sensorial properties thereof. In brief, the invention comprises the product iron salt, ALG, such as $FeSO_4.H_2O.ALG$, and the method of preparation thereof.

## DETAILS OF THE INVENTION

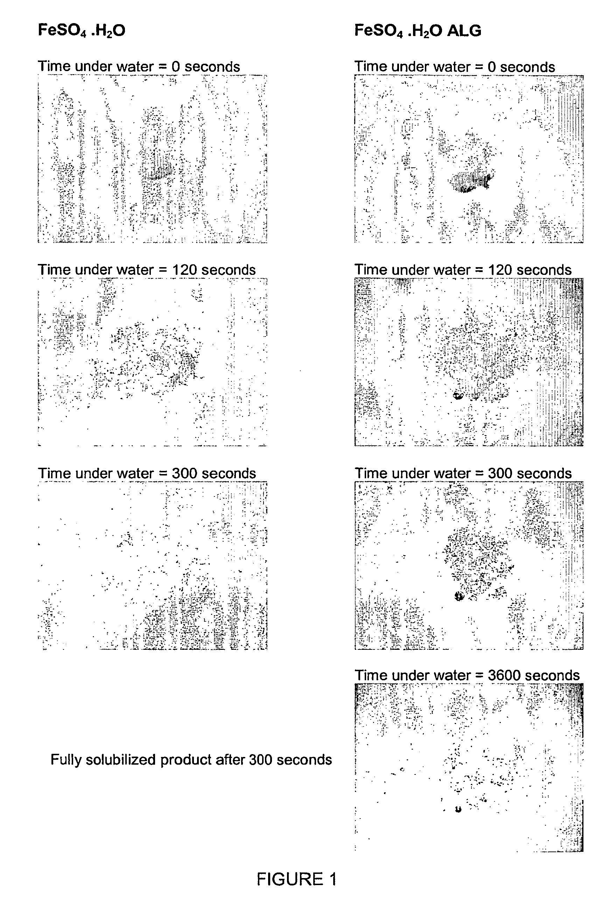

It was found that when the product, such as $FeSO_4.H_2O.ALG$, covered with said alginate film is placed in contact with water, a gel is obtained in the first step, and than if it dissolves slowly, releasing the ferrous sulphate core into the mean, as shown in Figure 1, that are micrographs provided by optic microscopy, with a 40x magnification, illustrating the solubilization of the product $FeSO_4.H_2O.ALG$ compared to that of $FeSO_4.H_2O$ in water. The advantage provided by the product $FeSO_4.H_2O.ALG$ is that the ferrous sulphate can be incorporated to dehydrated food stuff, such as wheat flour and other cereals, thus eliminating the problems due to its high reactivity and the interaction with other components of these food products, such as fats, those derived either from the changes in sensorial properties, such as flavor (rancidity) and from the stability of the fortified food stuff.

In accordance with the invention, the product $FeSO_4.H_2O.ALG$ comprises mono-hydrated $FeSO_4$, the particles of which are coated with an alginate solution, thus generating an iron alginate film. The amount of alginate should be enough to coat the particles, but it is not necessarily critical herein. A composition comprising approximately 5 to 10% alginate is satisfactory, but lower or higher amounts can be used.

The $FeSO_4.H_2O.ALG$ of the present invention should have physical characteristics, such as particle size and nominal density, close to those of flours of cereals or food stuff to be fortified, a critical requisite to promote a good mixing and not cause the segregation thereof.

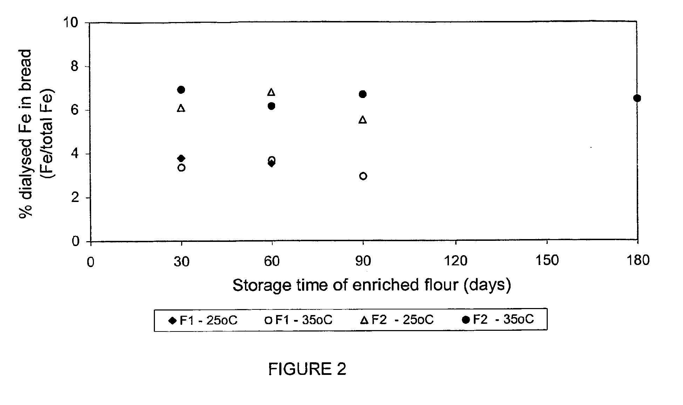

The flours, mainly that of wheat, that are fortified with the product $FeSO_4.H_2O.ALG$ have a shelf life comparable to that of pure flours for six months, thus not requiring any additives that do have no nutritional value and just improve the stability thereof. Figure 2 shows to the dialysis ability of the iron taken from bread prepared by using wheat flour fortified with the product $FeSO_4.H_2O.ALG$ (F2), stored for 180 days under different temperature conditions (25˚C and 35˚C), where $FeSO_4.H_2O$ is used as reference product (F1).

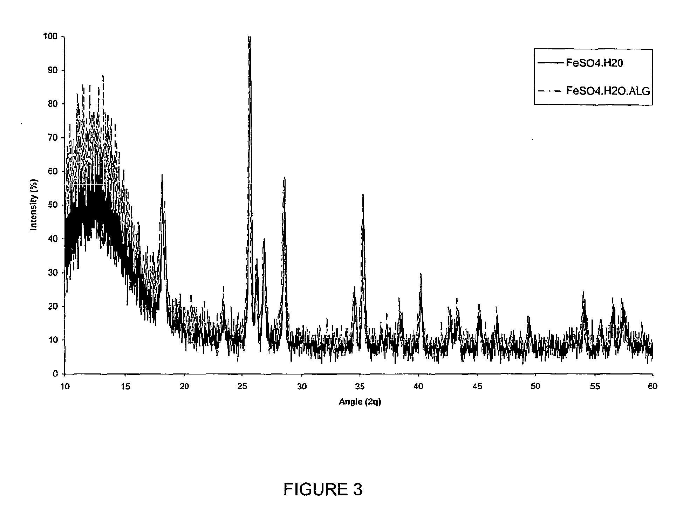

$FeSO_4.H_2O.ALG$ has a bioavailability similar to that of $FeSO_4.H_2O$ evidenced in *vivo* tests. The difference between them is only related to the degree of crystallinity: $FeSO_4.H_2O.ALG$ is less crystalline in view of the alginate coating, as expected. The core of $FeSO_4.H_2O.ALG$ is comprised of $FeSO_4.H_2O$ that has not been modified by the process for the preparation of $FeSO_4.H_2O.ALG$, as shown in Figure 3, that are X-ray difractographs of $FeSO_4.H_2O.ALG$ and $FeSO_4.H_2O$ samples.

The preparation of the product of the present invention involves in the first step of deposition of an alginate film on the surface of bioavailable iron salt particles, such as ferrous sulphate. The alginate is a product usually marketed in the form of a monovalent cation salt such as sodium or potassium, and both can be used herein.

The distribution of the finely sprayed alginate solution on the surface of solids under agitation allows for the deposition of a fine layer of said solution on ferrous sulphate particles, thus favoring the formation of the iron alginate film that shall coat them. The mechanism of formation of said iron alginate film involves the cross-linking and gellation of carboxylic groups of the alginate by divalent cations such as $Fe^{+2}$. All and any operation that allows for the deposition of an alginate film on ferrous sulphate particles can be employed, however, it should be preferably carried out by spraying the solution through a spraying nozzle on the ferrous sulphate particles kept under agitation in a conventional equipment for agitating solids. Equipment such as tilted plates or rotating drums, which may or may not be provided with auxiliary agitating vanes or fluidized bed, the temperature of which is controlled, where the particles are kept moving upward and downward by an air current that permeates the particle bed are indicated for this operation.

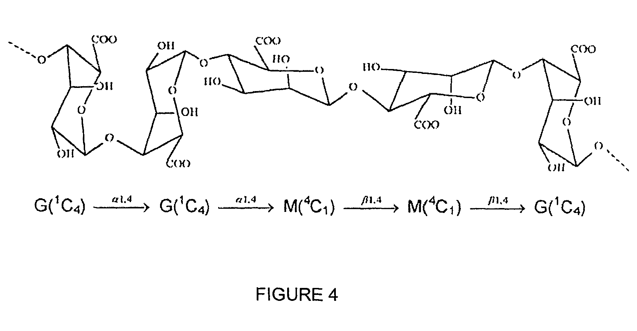

The alginate is a linear non-branched copolymer of residues of uronic acid, $\beta$-D-manuronic (M) acid and $\alpha$-L-guluronic acid (G), with linkages between carbons 1 and 4, arranged in homopolymeric blocks of each residue (MM and GG) and heteropolymeric blocks of the two residues (MG), as shown in Figure 4, that it is a schematic drawing of its structural formula. Its composition and sequence may change depending on the organism and the tissue they had been isolated from. The flexibility of such polymeric blocks in the alginate molecules in solution decreases in the MG > MM > GG order, while the viscosity depends mainly on the size of the molecule. Such selective linkage of divalent cations in the alginate influences directly the ability to form ionotropic gels.

The control of the thickness of the alginate layer deposited on the surface of ferrous sulphate particles can be carried out by using two different procedures:

1) varying the concentration of the alginate solution used in the process;
2) performing the deposition in several stages, in repeated operations of spraying the alginate solution on the surface of ferrous sulphate particles, after a fast drying step between a deposition and the next.

The first procedure — variation of the concentration of the alginate solution - has a limited application to alginate concentrations lower than 3% by weight, for more concentrated solutions have very high viscosities (gels), thus causing serious difficulties in the spraying dispersion, what can compromise the uniformity of the alginate layer deposited on the surface of ferrous sulphate particles. The high viscosity also hampers the solubilization of the surface layer of ferrous sulphate required for the ionic diffusion and formation of the iron alginate gel.

The second procedure — aspersion steps - allows for a better control of the deposition of the alginate solution and formation of the iron alginate layer. The preparation of the product through aspersion steps requires the deposited layer to be dried up between one aspersion and the next. Said drying can be performed in the air at the room temperature or under controlled conditions wherein the temperature ranges between 30°C and 160°C, depending on the drier used. A good procedure is the fluidized bed aspersion, followed by the fast drying, between 40 and 360 seconds and at temperatures between 60 and 130°C, before the aspersion is resumed and the next layer of alginate solution is deposited.

Another critical point in this stage for the preparation of the product is the control of the particle size of the product recovered by the alginate solution that, for example, shall not exceed 300 microns in the event it is used to fortify wheat flour. Such control can be effected by reducing the particle size by milling the product, after the drying step between a aspersion step and the next, or, preferably, by using a simple particle size classification of the product through screening, in order to eliminate the coarse ones that shall be milled or discarded later on. This classification can be carried out between the aspersion steps or only at the termination of the preparation of the product.

A simple fast method to check the deposition of the alginate layers and the formation of iron alginate is the visual monitoring, through optic microscopy, of the behavior of a number of these particles already dried in water after a aspersion step. One can easily see the change in the dissolution because of the water absorbed by the iron alginate layer as shows Figure 1, that are micrographs provided by optic microscopy, with a 40x magnification, illustrating the solubilization of the product $FeSO_4.H_2O.ALG$ compared to that of $FeSO_4.H_2O$ in water.

A variant of the present invention is the increase in the strength of the iron alginate gel formed on the surface of bioavailable iron salt particles, such as ferrous sulphate, obtained in view of the deposition of an additional layer of an alginate-chitosan film. The alginate forms stable complexes with polycations such as chitosan or synthetic polymers such as polyethylamine and poly-L-lisine. The poly-L-lysine is a much more expensive product than chitosan and its linkage with the alginate is weaker than the linkage between the alginate and chitosan. Chitosan is a natural polyaminosaccharide obtained from the N-deacetilation of the chitin. Chitin is, next to the cellulose, the second most abundant natural polysaccharide.

The procedure is the same described hereinabove, involving the deposition of the alginate solution on consecutive layers interspersed through a step wherein every layer already deposited is quickly dried up. The variant of the procedure is accomplished by aspersion of a layer of a chitosan solution on an alginate layer already deposited on the surface of the ferrous sulphate particles, and use could be made of a 0.1 to 3% by weight chitosan solution prepared by dissolving chitosan in water and setting the pH of the solution between 2 and 6 with a suitable acid, preferably between 2 and 4 with an acetic acid solution. After the deposition, the following step is the drying stage as already described.

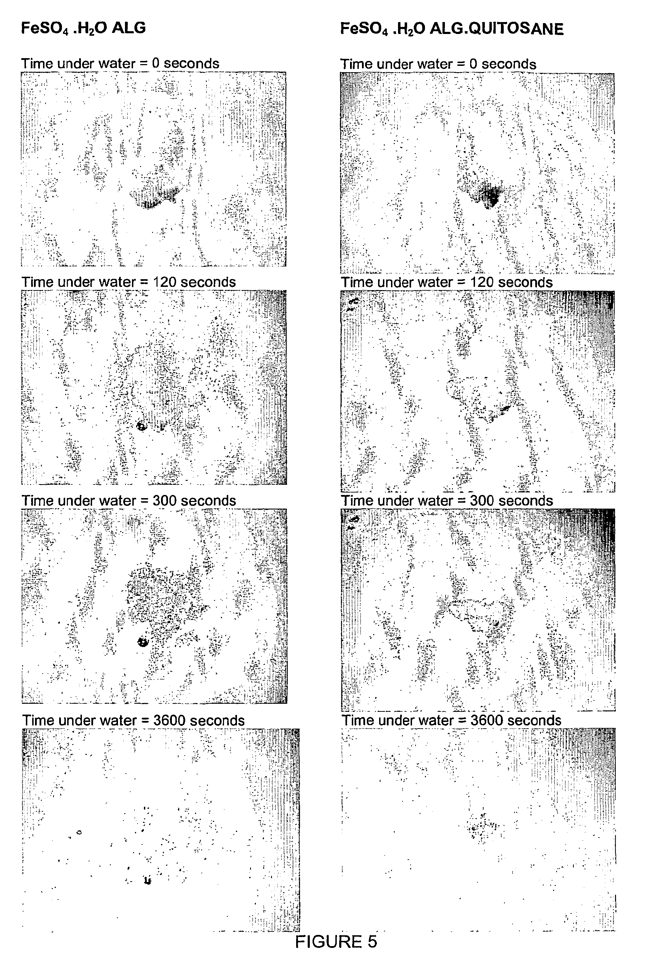

Figure 5, that show micrographs obtained through optic microscopy, with a 40x magnification, which illustrate the solubilization of the product $FeSO_4.H_2O.ALG.CHITOSAN$ compared to that of $FeSO_4.H_2O.ALG$ in water.

A few tests to obtain $FeSO_4.H_2O.ALG$ micro-particles are given below, as well as a number of the characteristics of the use thereof as a fortification supplement for dehydrated foodstuff.

## TEST 1

Reagents: $FeSO_4.H_2O$ and a 0,5% by weight of sodium alginate solution.

In a mixer provided with vanes, $FeSO_4.H_2O$ was mixed to a 0,5% by weight of sodium alginate solution, keeping an alginate to ferrous sulphate seconds. Next, the material was dried up in a fluidized bed drier at a temperature of 120˚C.

The dry product was comminuted and thoroughly passed through a #100 Tyler screen. The mixing operation was repeated by adding further 1% of alginate to the product of the first mixture. The product provided in the second mixing stage was dried up in the fluidized bed drier and then comminuted. This cycle of operations was repeated five times until a total of 5% of alginate, which had been incorporated into ferrous sulphate, thus giving a final product of: $FeSO_4.H_2O.ALG$ with 95% $FeSO_4.H_2O$ and 5% alginate.

The final product was submitted to a number of physical-chemical characterizations:

a) Physical characteristics

Some characteristics of $FeSO_4.H_2O.ALG$, such as particle size, nominal density, water content, Fe content, were determined experimentally and are given in Tables 1 and 2 in comparison to the characteristics of both commercial $FeSO_4.H_2O$ and wheat flour.

The modification of the commercial product $FeSO_4.H_2O$ with an alginate coating caused a small increase in the average size of the lot of particles D(4,3) and the nominal density of the product, thus resulting in an improvement of its fluidity, but these alterations have not been significant enough to compromise the adequacy of the characteristics of this new compound to be incorporated into wheat flour.

### TABLE 1

**COMPARISON OF A NUMBER OF PHYSICAL CHARACTERISTICS OF BOTH COMMERCIAL $FESO_4.H_2O$ AND WHEAT FLOUR.**

| Compound | Fe Content (%) | $H_2O$ Content KARL FISHER (%) | Particle size (microns) | | | Nominal density (g/cm$^3$) | |
|---|---|---|---|---|---|---|---|
| | | | | | | Packing | |
| | | | D(4.3) | D(0.1) | D(0.9) | free | Maximum |
| $FeSO_4.H_2O$ | 33 | 15.47 ± 0.75 | 101.9 | 13.6 | 247.6 | 0.73 | 1.17 |
| $FeSO_4.H_2O$ . ALG | 29 | 4.61 ± 0.64 | 121.4 | 6.7 | 287.5 | 0.87 ± 0.01 | 1.08 ± 0.01 |
| Wheat flour | 0,001 | 14.04 ± 0.71 | 82.3 | 15.5 | 167.3 | 0.43 ± 0.001 | 0.76 ± 0.002 |

### TABLE 2 - COMPARISON OF PHYSICAL CHARACTERISTICS OF BOTH COMMERCIAL $FESO_4.H_2O$ AND WHEAT FLOUR.

| Compound | Rest angle (˚) | Carr index (%) | Hausner index (%) |
|---|---|---|---|
| $FeSO_4.H_2O$ | 48.0 | 37.1 | 28.5 |
| $FeSO_4.H_2O.ALG$ | 31.63 ± 0.74 | 19.2 | 78.0 |
| Wheat flour | 49.60 ± 0.92 | 42.8 | 31.0 |

Carr Index - solid particle flow characteristic, related with the compressibility of the material, to be determined by measuring the aerated nominal density ($\rho b$) and the packing nominal density ($\rho t$) of the material, as an indication of the difference between them ($I_{carr}$ , = 100 * ($\rho t$ - $\rho b$) / $\rho t$). The Carr index provides a measure of the instantaneous fluidity: the higher the compressibility of a material the lower its fluidity.

Hausner Index — a measure that indicates the fluidity of a particulate material, defined as the relationship between the densities $\rho_t$ and $\rho_b$ (HR = $\rho_t$ / $\rho_b$): the higher the Hausner index, the higher the cohesion between particles and the lower the fluidity of the solid material.

b) Characterization of the crystalline structure of the product $FeSO_4.H_2O.ALG$ compared to $FeSO_4.H_2O$.

Besides the physical characterization, the product $FeSO_4.H_2O.ALG$ has also been analyzed through X-ray diffraction, compared to $FeSO_4.H_2O$. Since they show the results of the X-ray diffraction analyses shown in Figure 3, the only difference that has been identified between both the samples is related to the crystallinity. $FeSO_4.H_2O.ALG$ is more amorphous than $FeSO_4.H_2O$, what is evidenced either by intensity of the peaks or by the comparison of the relative intensities showing that the region of low incidence angle (2q) that is characteristic of the amorphous phase is more intense in the sample containing alginate. The two samples are poorly crystalline and exhibit the same morphology: monoclinic. The comparison with the database shows $FeSO_4.H_2O$ (Szomonokite) as an identification therefor. Unit cell parameters: a = 7,081; b = 7,549; c = 7,775 and beta = 118,61 °.

### TEST 2

The absorption of Fe takes place in the small intestine, and the pH on the upper portion where the absorption of the iron takes place switches between high and low acidity (2.5 to 6.0). Since bioavailability tests in human beings are complex, the solubility in a mimic acid mean is used as a reference with a buffer acetate solution at a pH 4.5 (average value between 2.5 and 6.0) as a dissolution mean.

The dissolution profile of the iron present in $FeSO_4.H_2O.ALG$ micro-particles was determined in commercial equipment specifically designed for assays of this nature which consist on six agitated cylindrical flasks provided with temperature control. The samples were inserted into commercial gelatin capsules that were then introduced in each one of the six cylindrical flasks containing the dissolution mean. These capsules dissolve quickly when contacted with the dissolution mean and the function of which is to prevent the initial dispersion of the product in the liquid mean and establish precisely the exact moment the micro-particles contact the dissolution mean. During the whole assay, the agitation rate of the system was kept at 100 rpm and the temperature of the mean at 37 $\pm$ 0,1°C. The samples of the dissolution mean were removed at regular intervals of time, filtered and analyzed through atomic absorption spectrophotometry. The concentration of iron in these samples was calculated from calibration curves that had been prepared previously. Every glassware used in these experiments was submitted to the following early demineralization procedure: 1) washing with water and detergent; 2) immersion in a 30% by volume nitric acid bath during a minimum period of 12 hours; 3) ten washing cycles using deionized water; 4) drying in a greenhouse.

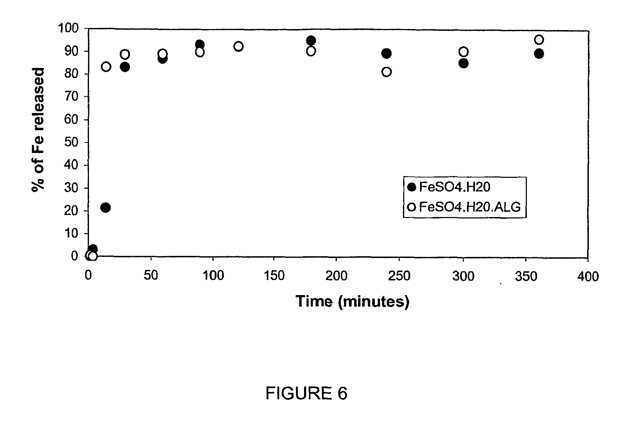

Figure 6 shows the dissolution kinetics graph of this compound, wherein $FeSO_4.H_2O$ is used as a reference product. As can be evidenced by the comparison between the curves of both products, the dissolution kinetics of $FeSO_4.H_2O.ALG$ and $FeSO_4.H_2O$ in an acid mean are quite similar, that is, the coating with alginate does not change the solubility of $FeSO_4.H_2O$, what is desirable in order not to modify the good bioavailability thereof.

### TEST 3

This test shows the data of a sensorial analysis carried out by using bread prepared with wheat flour fortified with the product $FeSO_4.H_2O.ALG$, immediately after the flour had been fortified, in accordance with the ANVISA suggestion of 4.3 mg Fe/100 g flour, thus evidencing the fact that its incorporation into the wheat flour does not change the sensorial properties of bread prepared by using the enriched flour.

The bread has been prepared following the formulation given in Table 3.

**TABLE 3**

| INGREDIENTS FOR THE BREAD FORMULATION | |
|---|---|
| Ingredients | Proportion |
| Wheat flour* | 100% |
| Salt | 2% |
| Sugar | 5% |
| Fresh yeast | 3% |
| Hydrogenated fat | 3% |
| Water | The balance to 500 UF* |
| Ascorbic acid | 90 mg/kg |
| *UF: flour-related units. | |

Samples of bread prepared by using the flour fortified with $FeSO_4.H_2O.ALG$ were evaluated sensorially in relation to the "standard" (bread prepared by using the flour without additives - FSA) to score the flavor, by a team of 25 selected judges to classify the sensorial acuity, using the following Multiple Comparison score of 1 to 5 points: 5 = a flavor Better than the Standard (P); 4 = a flavor Equal to the Standard (P); 3 = a flavor Lower Than P, wherein no strange flavor was detected; 2 = a flavor Lower Than P, wherein a slight strange flavor was detected; 1 = a flavor Lower Than P, wherein an unacceptable strange flavor was defined.

The average values obtained in the sensorial evaluation of the bread produced with the "standard" flour and those using flour enriched with $FeSO_4.H_2O.ALG$ are given in Table 4.

### TABLE 4

| SENSORIAL EVALUATION OF THE BREAD PRODUCED WITH THE "STANDARD" FLOUR AND THOSE USING FLOUR ENRICHED WITH $FESO_4.H_2O.ALG$ | |
| --- | --- |
| Sample | Score (average $\pm$ standard deviation) |
| Bread prepared by using flour with no additives - FSA (Standard) | 3.9 $\pm$ 0.4 |
| Bread prepared with flour enriched with $FeSO_4.H_2O.ALG$ | 3.7 $\pm$ 0.9 |

### TEST 4

The following procedure was used to test the stability of wheat flour enriched with the product $FeSO_4.H_2O.ALG$: To 100 g of commercial wheat flour, an amount of the product $FeSO_4.H_2O.ALG$ was added in order to incorporate 4.3 mg Fe. The mixture was prepared in a type V mixer, for 30 minutes. The samples were conditioned in chambers under controlled conditions wherein the temperatures range between 25 and 35˚C and a relative humidity of 75% kept by means of saturated sodium chloride solutions. During the storage, the samples (selected by random sampling in the storage chambers) were submitted to periodic analyses every 30 days until a 180-day storage period was completed. The sample of wheat flour with no additives - FSA was also conditioned under refrigeration and referred to as the "Reference" sample for the purpose of sensorial evaluation. At first and every 30-day storage period, the flours were evaluated as to the humidity and sensorial characteristics of appearance and odor, and more bread was produced for a more thorough sensorial evaluation, in terms of appearance, odor, texture and flavor. The methodologies used therefor are described below.

The flour enriched with the product $FeSO_4.H_2O.ALG$ was named F2 and the flour enriched with $FeSO_4.H_2O$ was named F1.

Sensorial characteristics of the flours: Examination of the sensorial characteristics of the samples by a team of judges, wherein the as received product was evaluated as to the appearance and odor both at first and while being stored.

Bread production: The bread was prepared in the laboratory by using the formulation according to Table 3. At first, the dough was prepared and divided into 160 gram pieces that were shaped and then placed on taken aluminum molds and taken into the fermentation chamber where they were kept for 135 minutes at a temperature of 30˚C. Next, the bread was baked at a temperature of 200˚C for 25 minutes and packed after being cooled down.

Training of the sensorial team and development of the terminology for the quantitative descriptive analysis of the bread produced by using the wheat flour samples: To define the sensorial attributes corresponding to the performing of the quantitative descriptive analysis (QDA) of the samples, the network method has been applied in the evaluation of differences and similarities between bread samples produced with both recently made wheat flour and aged wheat flour. Pairs of samples were compared as to the differences and similarities in their appearance, odor, texture and flavor. After the individual evaluation, group discussion sessions have been held in order to define the attributes of higher importance for evidencing the sensorial characteristics of the product in a consensual way besides the position in the scoring relative to the sample referred to as the "Reference" sample, that is, the sample with the characteristic of a fresh product. Subsequently, other evaluation and group discussion sessions have been held in order to validate the sensorial terms. However, 18 judges and bread tasters participated in these stages to evaluate the sensorial acuity.

Sensorial evaluation of bread: The QDA, as per the specific terminology developed according to the above described network method, was carried out by a team selected and trained for bread evaluation that was comprised of 15 judges, using the non-structured score of 10 to evaluate the appearance characteristics (cream color and size of the cells), odor (characteristic of fresh/soft, acidic, moldy/old and oxidized/rancid bread), non-oral texture (softness, elasticity, humidity, presence of clumps), oral texture (softness and adherence) and flavor (characteristic of fresh/soft, bitter, moldy/old, oxidized/rancid, metallic and strange bread), with an overall evaluation at to the degree of difference and loss of quality with respect to the "Reference". The sample of bread produced by using the wheat flour with no additives referred to as the "Reference" sample - FSA — was kept under refrigeration. The analyses have been carried out individually in chambers that were illuminated by fluorescent lamps and equipped with a computerized system for collecting the data and the samples showed a monadic three random digit code, according to a profile of renderized complete blocks. The final data were then submitted to the variance analysis and Tukey test for the sake of comparison between the averages and the linear regression analysis for the sake of estimation of the shelf life.

Monitoring of the humidity during the storage: As shown in Table 5, the incorporation of the product $FeSO_4.H_2O.ALG$ into the wheat flour (formulation F2) has not changed its humidity during the storage in comparison to the flour with no Fe (FSA), that is, under the conditions of the study, the samples have remained consistent with the humidity standards established by Ordinance Number 354 of July 18, 1996 of "Agência Nacional de Vigilância Sanitária", which sets out a maximum acceptable limit of 15.0% (m/m).

Table 5 shows the average results obtained in three determinations of the humidity in wheat flour samples (day "zero") and during the storage.

TABLE 5

| DETERMINATION OF THE HUMIDITY IN WHEAT FLOUR SAMPLES DURING THE STORAGE (% M/M)* | | | | | |
|---|---|---|---|---|---|
| Storage time (days) | Samples and storage conditions | | | | |
| | FSA 5˚C | FSA 25˚C | FSA 35˚C | F2 25˚C | F2 35˚C |
| 0 | 13.69 | --- | --- | 13.67 | --- |
| 30 | 13.23 | 12.67 | 12.70 | 13.17 | 13.25 |
| 60 | 13.15 | 14.22 | 11.98 | 12.56 | 12.34 |
| 90 | 11.45 | 12.64 | 10.40 | 13.12 | 11.45 |
| 120 | 11.73 | 13.50 | 11.53 | 12.40 | 10.94 |
| 150 | 12.06 | 11.39 | 11.91 | 13.06 | 11.82 |
| 180 | 12.88 | 14.65 | 12.13 | 13.77 | 13.10 |
| *FSA = wheat flour with no additives; F2 = Formulation 2 (wheat flour enriched with $FeSO_4.H_2O.ALG$) | | | | | |

Sensorial characteristics of the wheat flour during the storage: To evaluate the effect of the new compound $FeSO_4.H_2O.ALG$ on the stability of the wheat flour during storage, formulation F1 was prepared by using the flour enriched with $FeSO_4.H_2O$.

At first, that is, before the storage, the wheat flour samples with no additives, Formulation F1 and Formulation F2 showed the same appearance and odor:

1) Appearance: fine flowable dust of a white-cream color with presence of clumps that break easily;
2) Odor: characteristic of wheat flour, free of strange odors.

As the storage time went on, all the samples tended to become gloomy (changing from white-cream to grayish cream), more agglomerated more and lose intensity of the peculiar odor, but such changes are more perceivable in the products stored at 35˚C than those stored at 25˚C. In addition, the samples kept at 35˚C started developing a slightly oxidized odor by the day 150 of storage that is characteristic of old wheat flour that was considered more intense by the day 180 of storage. On the other hand, the samples kept at 25˚C have not developed said oxidized odor until the end of the study.

The Reference sample, that is, the wheat flour with no additives kept under refrigeration (5˚C), remained practically unchanged, and only a slight loss of intensity of the peculiar odor could be detected by the end of the period of study.

Table 6 shows the results of the sensorial characteristics of the wheat flour with no additives (FSA), enriched with $FeSO_4.H_2O$ (F1) and containing $FeSO_4.H_2O.ALG$ (F2), during the storage under conditions of controlled temperature and humidity.

Changes related to the stability of the flour enriched with $FeSO_4.H_2O.ALG$ (F2) and $FeSO_4.H_2O$ (F1) could be better perceived in the flours stored at 35˚C than the flour stored at 25˚C, and the data at 35˚C are shown as the reference in Table 6. They evidence that Formulation F2 is more stable than Formulation F1: while in the flour enriched with $FeSO_4.H_2O$ (F1) the changes described started being noticed after 30 days of storage at 35˚C, mainly in relation to the darkening of the product; in the flour enriched with $FeSO_4.H_2O.ALG$ (F2) this only occurred after 90 days of storage. In the wheat flour with no additives kept at 35˚C (FSA), the changes have been identified after 120 days of storage.

**TABLE 6**

| SENSORIAL CHARACTERISTICS OF THE WHEAT FLOUR WITHOUT ADDITIVES (FSA), WHEAT FLOUR ENRICHED WITH FESO$_4$.H$_2$O (F1) AND FESO$_4$.H$_2$O.ALG (F2), DURING THE STORAGE UNDER CONDITIONS OF CONTROLLED TEMPERATURE AND HUMIDITY | | | | | | |
|---|---|---|---|---|---|---|
| Formulation | Storage time at 35˚C, relative humidity of 75% | | | | | |
| | 30 days | 60 days | 90 days | 120 days | 150 days | 180 days |
| FSA | - | - | - | Aa | aaa | aaaa |
| F2 | - | - | aa | Aa | aaa | aaaa |
| F1 | Aa | aa | aa | Aa | aaa | aaaa |
| aa = trend to become gloomy, changing from white-cream to grayish-cream, more agglomerated and to lose intensity of the peculiar odor.<br>aaa = light oxidized odor characteristic of old wheat flour.<br>aaaa = intensification of oxidized odor. | | | | | | |

Sensorial evaluation of bread during the storage: Tables 7, 8 and 9 show the average values related to the quantitative descriptive sensorial analysis (QDA) of bread obtained by using wheat flour samples at first and after 30 and 60 days of storage at 25˚C and 35˚C, for the purpose of comparing the samples with one another and with the Reference sample, that is, the wheat flour with no additives kept under refrigeration.

**TABLE 7A**

| AVERAGE VALUES OBTAINED IN THE SENSORIAL EVALUATION OF BREAD PRODUCED FROM FSA WHEAT FLOUR SAMPLES BY THE TEAM COMPRISED OF 12 TRAINED JUDGES BY THE DAY 30 OF STORAGE.* | | | | |
|---|---|---|---|---|
| Storage time (days) | 30 | | | |
| Attributes | Reference (FSA - 5˚C) | FSA - 25˚C | FSA - 35˚C | D.M.S. |
| **Appearance**<br>1. Cream color | 3.0 ± 0.0 c | 3.0 ± 0.1 c | 3.3 ± 0.5 bc | 0.66 |
| 2. Size of cells | 5.0 ± 0.2 a | 5.1 ± 0.5 a | 4.0 ± 0.7 abc | 1.19 |
| **Odor**<br>3. Characteristic of fresh bread | 7.9 ± 0.3 a | 7.7 ± 0.5 a | 7.6 ± 0.5 a | 1.01 |
| 4. Acidic | 2.1 ± 0.4 a | 2.0 ± 0.1 a | 2.1 ± 0.4 a | 0.65 |
| 5. Moldy/old | 0.0 ± 0.1 a | 0.1 ± 0.3 a | 0.1 ± 0.2 a | 0.48 |
| 6. Oxidized / rancid | 0.1 ± 0.2 a | 0.1 ± 0.3 a | 0.1 ± 0.2 a | 0.35 |
| **Non-oral texture**<br>7. Softness | 8.0 ± 0.1 a | 7.8 ± 0.3 a | 6.2 ± 2.5 a | 2.17 |
| 8. Elasticity | 7.9 ± 0.2 a | 8.0 ± 0.1 a | 7.0 ± 0.6 b | 0.84 |
| 9. Humidity | 7.0 ± 0.1 a | 6.9 ± 0.3 a | 7.1 ± 0.8 a | 0.80 |
| 10. Presence of clumps | 0.1 ± 0.2 a | 0.0 ± 0.1 a | 0.4 ± 1.0 a | 0.88 |

(continued)

| | Reference | FSA - 25°C | FSA - 35°C | D.M.S. |
|---|---|---|---|---|
| **Oral texture** | | | | |
| 11. Softness | 7.9 ± 0.2 a | 7.8 ± 0.5 a | 7.4 ± 0.8 ab | 0.80 |
| 12. Adherence | 3.1 ± 0.2 a | 3.0 ± 0.2 a | 3.5 ± 0.4 a | 1.02 |
| **Flavor** | | | | |
| 13. Characteristic of fresh bread | 7.9 ± 0.2 a | 7.7 ± 0.5 a | 7.3 ± 0.6 a | 0.93 |
| 14. Sour | 0.0 ± 0.0 a | 0.0 ± 0.0 a | 0.1 ± 0.1 a | 0.36 |
| 15. Moldy / old | 0.0 ± 0.0 a | 0.1 ± 0.3 a | 0.2 ± 0.5a | 0.43 |
| 16. Oxidized / rancid | 0.0 ± 0.1 a | 0.1 ± 0.2 a | 0.3 ± 0.4 a | 0.37 |
| 17. Metallic | 0.1 ± 0.2 a | 0.0 ± 0.0 a | 0.1 ± 0.3 a | 0.30 |
| 18. Strange | 0.0 ± 0.0 a | 0.1 ± 0.3 a | 0.1 ± 0.1 a | 0.33 |
| **Overall evaluation** | | | | |
| 19. Degree of difference | 0.0 ± 0.0 d | 0.3 ± 0.4 cd | 0.8 ± 0.4 abc | 0.82 |
| 20. Loss of quality | 0.0 ± 0.0 c | 0.3 ± 0.4 bc | 0.8 ± 0.4 ab | 0.73 |
| * Values expressed as Average ± Standard Deviation. FSA = wheat flour with no additives;. | | | | |

D.M.S.: Minimum difference significant at a 5% error level (Tukey Test). For each attribute, the values followed by different letters are statistically different from one another at the 5% error level.

**TABLE 7B**

| AVERAGE VALUES OBTAINED IN THE SENSORIAL EVALUATION OF BREAD PRODUCED FROM THE FSA WHEAT FLOUR SAMPLES BY THE TEAM COMPRISED OF 12 TRAINED JUDGES BY THE DAY 60 OF STORAGE.* | | | |
|---|---|---|---|
| **Storage time (days)** | **60** | | |
| **Attributes** | **Reference (FSA - 5°C)** | **FSA - 25°C** | **FSA - 35°C** | **D.M.S.** |
| **Appearance** | | | | |
| 1. Cream color | 3,0 ± 0,0 bc | 2,9 ± 0,4 c | 3,0 ± 0,5 bc | 0,79 |
| 2. Size of cells | 4,8 ± 0,4 a | 3,7 ± 0,9 b | 3,9 ± 0,5 ab | 1,11 |
| **Odor** | | | | |
| 3. Characteristic of fresh bread | 7,9 ± 0,2 a | 7,7 ± 0,7 ab | 7,5 ± 0,8 ab | 0,96 |
| 4. Acidic | 1,9 ± 0,2 a | 1,9 ± 0,6 a | 2,0 ± 0,3 a | 0,73 |
| 5. Moldy / old | 0,1 ± 0,2 b | 0,3 ± 0,5 ab | 0,1 ± 0,1 b | 0,89 |
| 6. Oxidized/rancid | 0,2 ± 0,4 b | 0,3 ± 0,5 ab | 0,1 ± 0,1 b | 0,86 |
| **Non-oral texture** | | | | |
| 7. Softness | 8,0 ± 0,1 a | 8,2 ± 0,5 a | 7,6 ± 0,8 ab | 1,09 |
| 8. Elasticity | 7,9 ± 0,3 a | 8,0 ± 0,6 a | 7,6 ± 0,9 ab | 1,06 |

(continued)

| Non-oral texture | | | | |
|---|---|---|---|---|
| 9. Humidity | 6,9 ± 0,4 a | 7,2 ± 0,4 a | 6,8 ± 0,8 a | 0,89 |
| 10. Presence of clumps | 0,3 ± 0,7 a | 0,1 ± 0,3 a | 0,2 ± 0,3 a | 0,50 |
| Oral texture 11. Softness | 8,0 ± 0,1 a | 7,9 ± 0,7 ab | 7,4 ± 1,1 abc | 1,17 |
| 12. Adherence | 3,1 ± 0,3 a | 3,2 ± 0,4 a | 3,5 ± 1,0 a | 1,03 |
| Flavor 13. Characteristic of fresh bread | 7,9 ± 0,2 a | 7,6 ± 0,8 a | 7,4 ± 0,8 ab | 1,40 |
| 14. Sour | 0,1 ± 0,1 a | 0,1 ± 0,2 a | 0,1 ± 0,1 a | 0,60 |
| 15. Moldy/old | 0,2 ± 0,5 b | 0,3 ± 0,5 b | 0,4 ± 0,3 b | 0,96 |
| 16. Oxidized / rancid | 0,2 ± 0,4 b | 0,2 ± 0,2 b | 0,1 ± 0,3 b | 0,87 |
| 17. Metallic | 0,1 ± 0,1 a | 0,2 ± 0,3 a | 0,1 ± 0,3 a | 0,38 |
| 18. Strange | 0,1 ± 0,1 b | 0,2 ± 0,3 ab | 0,4 ± 0,4 ab | 0,78 |
| Overall evaluation | | | | |
| 19. Degree of difference | 0,2 ± 0,3 d | 0,7 ± 0,5 cd | 1,0 ± 0,8 bcd | 0,94 |
| 20. Loss of quality | 0,2 ± 0,4 d | 0,6 ± 0,6 cd | 1,1 ± 0,9 bcd | 1,02 |
| * Values expressed as Average ± Standard Deviation. FSA = wheat flour with no additives. | | | | |

D.M.S.: Minimum difference significant at the 5% error level (Tukey Test). For each attribute, the values followed by different letters are statistically different from one another at the 5% error level.

**TABLE 8A**

| AVERAGE VALUES OBTAINED IN THE SENSORIAL EVALUATION OF BREAD PRODUCED FROM WHEAT FLOUR SAMPLES F2 BY THE TEAM COMPRISED OF 12 TRAINED JUDGES BY THE DAY 30 OF STORAGE.* | | | |
|---|---|---|---|
| Storage time (days) | 30 | | |
| Attributes | F1 - 25˚C | F1 - 35˚C | D.M.S. |
| Appearance 1. Cream color | 4.1 ± 0.7 a | 3.8 ± 0.7ab | 0.66 |
| 2. Size of cells | 4.5 ± 0.9 ab | 2.9 ± 1.4 c | 1.19 |
| Odor 3. Characteristic of fresh bread | 7.0 ± 1.0 a | 7.1 ± 0.7 a | 1.01 |
| 4. Acidic | 2.1 ± 0.3 a | 1.8 ± 0.8 a | 0.65 |
| 5. Moldy / old | 0.4 ± 0.6 a | 0.1 ± 0.2 a | 0.48 |
| 6. Oxidized / rancid | 0.4 ± 0.4 a | 0.1 ± 0.2 a | 0.35 |

(continued)

| | | | |
|---|---|---|---|
| *Non-oral texture*<br>7. Softness | 7.1 ± 0.7 a | 6.8 ± 0.5 a | 2.17 |
| 8. Elasticity | 7.4 ± 0.8 ab | 6.9 ± 0.6 b | 0.84 |
| 9. Humidity | 7.0 ± 0.6 a | 6.6 ± 0.7 a | 0.80 |
| 10. Presence of clumps | 0.4 ± 0.5 a | 0.1 ± 0.3 a | 0.88 |
| *Oral texture*<br>11. Softness | 7.6 ± 0.7 ab | 7.0 ± 0.7 b | 0.80 |
| 12. Adherence | 3.3 ± 0.9 a | 3.4 ± 0.8 a | 1.02 |
| *Flavor*<br>13. Characteristic of fresh bread | 7.3 ± 1.0 a | 7.2 ± 0.4 a | 0.93 |
| 14. Sour | 0.1 ± 0.3 a | 0.2 ± 0.3 a | 0.36 |
| 15. Moldy / old | 0.3 ± 0.3 a | 0.3 ± 0.3 a | 0.43 |
| 16. Oxidized / rancid | 0.3 ± 0.2 a | 0.2 ± 0.3 a | 0.37 |
| 17. Metallic | 0.1 ± 0.2 a | 0.2 ± 0.3 a | 0.30 |
| 18. Strange | 0.2 ± 0.2 a | 0.3 ± 0.4 a | 0.33 |
| *Overall evaluation* | | | |
| 19. Degree of difference | 0.8 ± 0.6 abc | 1.4 ± 0.8 a | 0.82 |
| 20. Loss of quality | 0.8 ± 0.6 ab | 1.1 ± 0.5 a | 0.73 |
| * Values expressed as Average ± Standard Deviation. F1 = Formulation 1. | | | |

D.M.S.: Minimum Difference significant at the 5% error level (Tukey Test). For each attribute, the values followed by different letters are statistically different from one another at the 5% error level.

**TABLE 8B**

| AVERAGE VALUES OBTAINED IN THE SENSORIAL EVALUATION OF BREAD PRODUCED FROM WHEAT FLOUR SAMPLES F1 BY THE TEAM COMPRISED OF 12 TRAINED JUDGES BY DAY 60 OF STORAGE.* | | | |
|---|---|---|---|
| **Storage time (days)** | **60** | | |
| *Attributes* | **F1 - 25˚C** | **F1 - 35˚C** | **D.M.S.** |
| *Appearance*<br>1. Cream color | 3.7 ± 0.5b | 4.7 ± 0.9a | 0.79 |
| 2. Size of cells | 4.5 ± 1.0 ab | 4.5 ± 1.1 ab | 1.11 |
| *Odor*<br>3. Characteristic of fresh bread | 6.9 ± 1.1 bc | 6.1 ± 0.4 c | 0.96 |
| 4. Acidic | 2.0 ± 0.5 a | 2.6 ± 0.7 a | 0.73 |
| 5. Moldy / old | 0.8 ± 0.8 ab | 1.2 ± 1.1 a | 0.89 |
| 6. Oxidized / rancid | 0.7 ± 0.6 ab | 1.1 ± 1.0 a | 0.86 |
| *Non-oral texture*<br>7. Softness | 7.2 ± 1.0 abc | 6.3 ± 1.0 c | 1.09 |

(continued)

| | | | |
|---|---|---|---|
| *Non-oral texture* | | | |
| 8. Elasticity | 7.2 ± 1.1 abc | 6.4 ± 1.1 c | 1.06 |
| 9. Humidity | 6.4 ± 1.0 a | 6.6 ± 0.8 a | 0.89 |
| 10. Presence of clumps | 0.0 ± 0.1 a | 0.0 ± 0.0 a | 0.50 |
| *Oral texture* | | | |
| 11. Softness | 7.2 ± 1.5 abc | 6.3 ± 1.2c | 1.17 |
| 12. Adherence | 2.9 ± 1.0 a | 3.9 ± 0.9 a | 1.03 |
| *Flavor* | | | |
| 13. Characteristic of fresh bread | 7.0 ± 1.2 abc | 5.8 ± 0.6 c | 1.40 |
| 14. Sour | 0.4 ± 0.6a | 0.4 ± 0.5a | 0.60 |
| 15. Moldy / old | 0.6 ± 0.7 ab | 1.4 ± 1.1 a | 0.96 |
| 16. Oxidized / rancid | 0.5 ± 0.6 b | 1.5 ± 0.9 a | 0.87 |
| 17. Metallic | 0.1 ± 0.2 a | 0.2 ± 0.4 a | 0.38 |
| 18. Strange | 0.4 ± 0.7 ab | 0.9 ± 0.9 a | 0.78 |
| *Overall evaluation* | | | |
| 19. Degree of difference | 1.2 ± 0.9 bc | 2.5 ± 0.7 a | 0.94 |
| 20. Loss of quality | 1.3 ± 1.2 bc | 2.6 ± 0.6 a | 1.02 |
| * Values expressed as Average ± Standard Deviation. F1 = Formulation 1. | | | |

D.M.S.: Minimum Difference significant at the 5% error level (Tukey Test). For each attribute, the values followed by different letters are statistically different from one another at the 5% error level.

**TABLE 9A**

| AVERAGE VALUES OBTAINED IN THE SENSORIAL EVALUATION OF BREAD PRODUCED FROM WHEAT FLOUR SAMPLES F2 BY THE TEAM COMPRISED OF 12 TRAINED JUDGES BY DAY 30 OF STORAGE.* | | | |
|---|---|---|---|
| **Storage time (days)** | **30** | | |
| *Attributes* | **F2 - 25˚C** | **F2 - 35˚C** | **D.M.S.** |
| *Appearance* 1. Cream color | 3.4 ± 0.6 abc | 3.3 ± 0.4 bc | 0.66 |
| 2. Size of cells | 4.9 ± 0.8 ab | 3.9 ± 0.7 bc | 1.19 |
| *Odor* 3. Characteristic of fresh bread | 7.5 ± 0.5 a | 7.2 ± 1.1 a | 1.01 |
| 4. Acidic | 2.0 ± 0.2 a | 2.0 ± 0.5 a | 0.65 |
| 5. Moldy / old | 0.2 ± 0.4 a | 0.1 ± 0.3 a | 0.48 |
| 6. Oxidized / rancid | 0.2 ± 0.2 a | 0.1 ± 0.1 a | 0.35 |
| *Non-oral texture* 7. Softness | 6.6 ± 2.5 a | 6.7 ± 1.4 a | 2.17 |

(continued)

| | | | |
|---|---|---|---|
| **Non-oral texture** | | | |
| 8. Elasticity | 7.7 ± 0.4 ab | 7.0 ± 1.1 b | 0.84 |
| 9. Humidity | 7.0 ± 0.6 a | 6.8 ± 0.3 a | 0.80 |
| 10. Presence of clumps | 0.3 ± 0.4 a | 0.5 ± 0.9 a | 0.88 |
| **Oral texture** 11. Softness | 7.7 ± 0.6 ab | 7.0 ± 0.9 b | 0.80 |
| 12. Adherence | 3.6 ± 0.6 a | 3.6 ± 1.1 a | 1.02 |
| **Flavor** 13. Characteristic of fresh bread | 7.5 ± 0.6 a | 7.2 ± 1.1 a | 0.93 |
| 14. Sour | 0.2 ± 0.4a | 0.2 ± 0.4a | 0.36 |
| 15. Moldy / old | 0.1 ± 0.3 a | 0.1 ± 0.1 a | 0.43 |
| 16. Oxidized / rancid | 0.2 ± 0.2 a | 0.1 ± 0.2 a | 0.37 |
| 17. Metallic | 0.1 ± 0.1 a | 0.0 ± 0.1 a | 0.30 |
| 18. Strange | 0.1 ± 0.2 a | 0.0 ± 0.0 a | 0.33 |
| **Overall evaluation** | | | |
| 19. Degree of difference | 0.5 ± 0.5 bcd | 1.1 ± 0.9 ab | 0.82 |
| 20. Loss of quality | 0.5 ± 0.4 abc | 1.1 ± 0.9 a | 0.73 |
| * Values expressed as Average ± Standard Deviation. F2 = Formulation 2. | | | |

D.M.S.: Minimum Difference significant at 5% error level (Tukey Test). For each attribute, the values followed by different letters are statistically different from one another at the 5% error level.

**TABLE 9B**

| AVERAGE VALUES OBTAINED IN THE SENSORIAL EVALUATION OF BREAD PRODUCED FROM WHEAT FLOUR SAMPLES F2 BY THE TEAM COMPRISED OF 12 TRAINED JUDGES BY DAY 60 OF STORAGE.* | | | |
|---|---|---|---|
| Storage time (days) | 60 | | |
| Attributes | F2 - 25˚C | F2 - 35˚C | D.M.S. |
| **Appearance** 1. Cream color | 3.3 ± 0.5 bc | 3.7 ± 0.8 bc | 0.79 |
| 2. Size of cells | 4.0 ± 1.0 ab | 4.3 ± 0.7 ab | 1.11 |
| **Odor** 3. Characteristic of fresh bread | 7.3 ± 0.8ab | 6.8 ± 0.7bc | 0.96 |
| 4. Acidic | 2.1 ± 0.2 a | 2.1 ± 0.7 a | 0.73 |
| 5. Moldy / old | 0.4 ± 0.5 ab | 0.3 ± 0.5 b | 0.89 |
| 6. Oxidized / rancid | 0.3 ± 0.5 ab | 0.3 ± 0.4 ab | 0.86 |
| **Non-oral texture** 7. Softness | 7.3 ± 0.8 abc | 6.8 ± 1.3 bc | 1.09 |

(continued)

| Non-oral texture | | | |
|---|---|---|---|
| 8. Elasticity | 7.7 ± 0.6 ab | 6.8 ± 1.1 bc | 1.06 |
| 9. Humidity | 6.8 ± 0.5 a | 6.9 ± 0.8 a | 0.89 |
| 10. Presence of clumps | 0.1 ± 0.2 a | 0.2 ± 0.4 a | 0.50 |
| Oral texture | | | |
| 11. Softness | 7.5 ± 0.7 ab | 6.7 ± 0.7 bc | 1.17 |
| 12. Adherence | 3.2 ± 0.4 a | 3.4 ± 0.9 a | 1.03 |
| Flavor | | | |
| 13. Characteristic of fresh bread | 7.3 ± 0.7ab | 6.1 ± 1.7 bc | 1.40 |
| 14. Sour | 0.3 ± 0.5a | 0.4 ± 0.5a | 0.60 |
| 15. Moldy / old | 0.5 ± 0.7 ab | 0.8 ± 0.9 ab | 0.96 |
| 16. Oxidized / rancid | 0.3 ± 0.6 b | 0.8 ± 0.8 ab | 0.87 |
| 17. Metallic | 0.1 ± 0.2 a | 0.1 ± 0.1 a | 0.38 |
| 18. Strange | 0.2 ± 0.5 ab | 0.3 ± 0.5 ab | 0.78 |
| Overall evaluation | | | |
| 19. Degree of difference | 1.0 ± 0.7 bcd | 1.7 ± 0.8 ab | 0.94 |
| 20. Loss of quality | 0.9 ± 0.7 bcd | 1.7 ± 0.7 ab | 1.02 |
| * Values expressed as Average ± Standard Deviation. F2 = Formulation 2. | | | |

D.M.S.: Minimum Difference significant at the 5% error level (Tukey Test). For each attribute, the values followed by different letters are statistically different from one another at the 5% error level.

At first, all the samples showed similar sensorial characteristics, and statistically significant differences have not been detected between them, and in special between Formulations 1 and 2 (Tables 8 and 9, respectively) and the Reference sample (Table 7) in all the attributes evaluated. However, as can be seen in Tables 7, 8 and 9, statistically significant differences have been noticed in relation to the Reference sample after 30 days of storage at 25°C for Formulation 1 and the other samples stored at 35°C, differences have been detected in relation to the color of the bread produced with Formulation 1 at both the temperatures, being considered darker than the Reference sample and in relation to a number of texture attributes for Formulations 1 and 2 at 35°C.

After 60 days of storage, a statistically significant loss of quality was detected at the 5% level in relation to the Reference sample for Formulation 1 at the two storage temperatures and for Formulation 2 at 35°C, with a loss of the intensity of odor and an improved peculiar flavor for these samples at 35°C. Among other changes, we can also notice the darkening of the bread produced with Formulation 1, in special at the storage temperature of 35°C. Even with a certain oscillation between the results, what is inherent to the study in view of the natural variability of the samples, of the process for producing bread and the sensorial team, the observation carried out by day 60 of storage is confirmed by the day 90 and increases since then, and a loss of quality is also detected in the flour with no additives stored at 35°C after day 150.

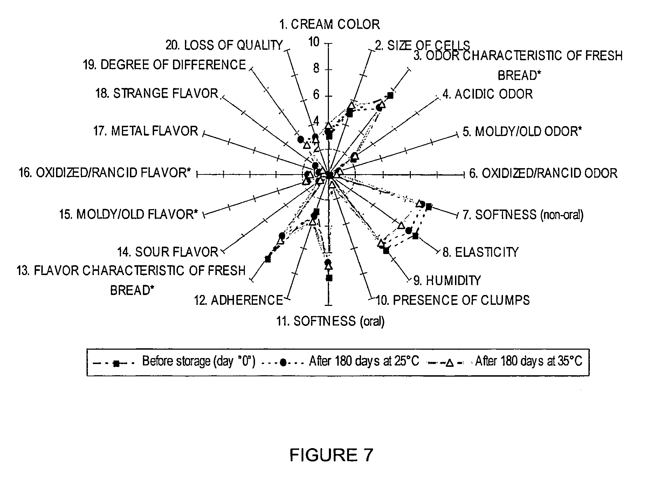

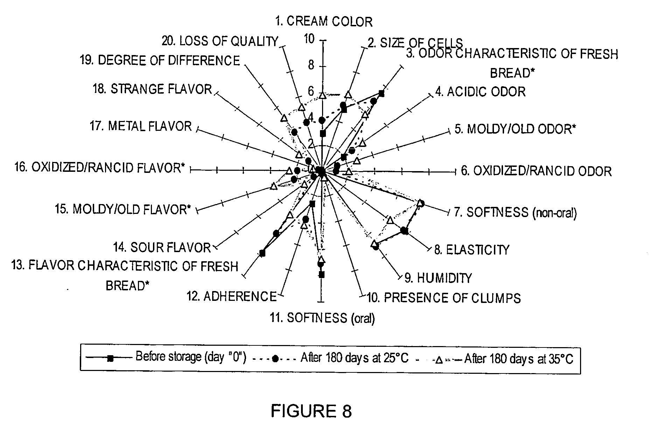

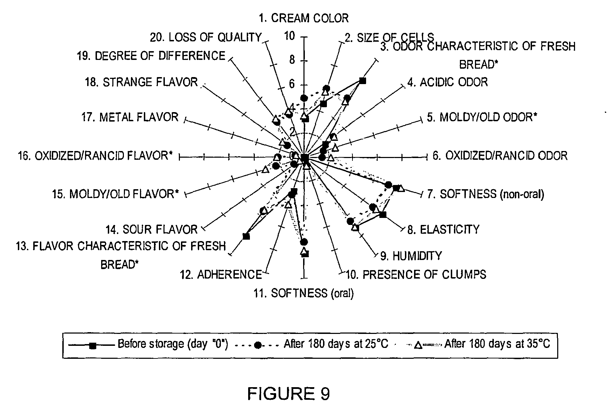

Figures 7 through 9 illustrate the sensorial profile of the samples in the beginning and at the end of the storage period studied for the flours with no additives (FSA), Formulation 1 (F1) and Formulation 2 (F2), respectively, under the storage conditions taken into account.

From the above, one can conclude that the speed at which the sensorial quality is deteriorated is as high as the storage temperature, and it can be seen that Formulation 1 is less stable than both Formulation 2 and the flour with no additives that remained acceptable up to 180 days of storage.


## TEST 5

The average total iron in bread containing non-enriched standard flour is from about 9.7 to 11.0 $\mu$g Fe/g bread on a dry basis, that is equivalent to about 0.001 % Fe in the bread. The bread prepared with enriched flour ($FeSO_4.H_2O$ (F1) or $FeSO_4.H_2O.ALG$ (F2)) has from about 0.005 to 0,0065 % Fe.

The assays for evaluating the dialysis ability of $FeSO_4.H_2O.ALG$ comprise the complete *in vitro* digestion of the foodstuff with pepsine after the mean is acidified with HCl (pH 2) and pancreatine/bile after the mean is basified with $NaHCO_3$ (pH 7) and dialysis of a cut membrane having a molecular weight of 6,000 to 8,000.

In general lines, this analysis involved the analytical determination of the total iron in the sample and the amount of said iron that can be dialysed after the complete *in vitro* digestion. In each analysis, the bread was weighed, milled and kept in' a freezer at -20˚C. About one hour before the analysis, the bread samples had been removed from the freezer to reach the room temperature. For the determination of the dialysed Fe, about 120 g bread were used, added to 250 ml demineralized water. After the homogenization, about 200 g were weighed in a beaker for the subsequent acidification with HCl (pH 2). The analytical determination of the dialysable Fe was carried out through atomic absorption spectrometry, according to the AOAC regulations (1980), using a wave length of 248.3 nm, 0.2 nm slit. The calculation made is as follows:

$$\% \text{ dialysed Fe} = (\mu g \text{ Fe/g dialysed} / \mu g \text{ Fe/g total}) * 100$$

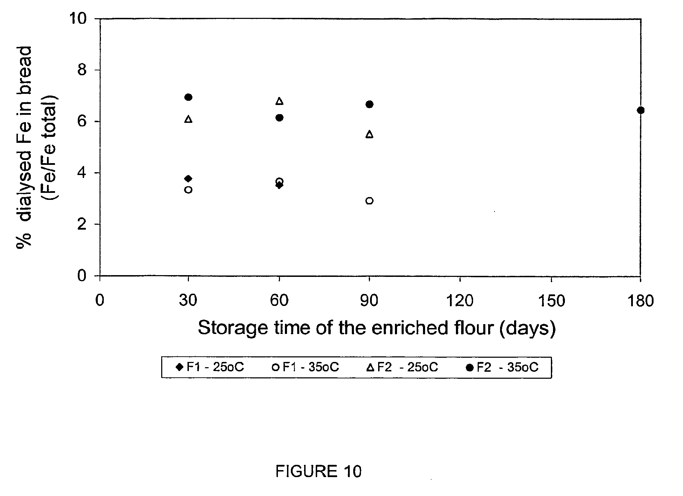

The results obtained in these tests are given in Figure 10, wherein it can be evidenced that the dialysis ability was hardly affected by the storage temperature (25˚C or 35˚C), but the dialysis ability of the Fe derived from the product $FeSO_4.H_2O.ALG$ is higher than the dialysis ability of the Fe derived from $FeSO_4.H_2O$, what it is an indication that the alginate film has probably played the role of a protection against the oxidation of $Fe^{+2}$ to $Fe^{+3}$ in the complete *in vitro* digestion process.

## TEST 6

Through bioavailability tests in swines, it was evidenced that the product $FeSO_4.H_2O.ALG$ has the same bioavailability of $FeSO_4.H_2O$.

The *in vivo* bioavailability of the product $FeSO_4.H_2O.ALG$ was tested in laboratory animals (recently weaned swines), through the use of the iron depletion/repletion process with maize based feed formulated in accordance with the NRC - National Research Council. The studies comparing the *in vitro* bioavailability of iron in animals and in clinical determination have shown that the results obtained can be well correlated with the studies made in human beings.

In order to get anemic animals, a 30 mg iron-dextran injection was administered thereto as soon as they were born, instead of the 200 mg Fe that is usually administered thereto. After the weaning period, they started being fed with a transition diet (< 27 mg/kg diet) for seven days. Water and the feed were supplied *ad libitum,* and both the weight of the animals and the consumption of feed were monitored during the treatment.

The regrouping of the animals for the tests was made when the average concentration of hemoglobin reached the average value of 75 g/l. This procedure was carried out based on the product weight (kg) x HB(g/l) that is directly related to the heme iron pool (mg). The calculation was made in accordance with the following relationship:

$$\text{Fe (mg)} = p \text{ (kg)} \times 0.06 \text{ (L/kg)} \times Hb \text{ (g/L)} \times 3.35 \text{ (mg Fe/g Hb)}$$

wherein:

p = animal weight;
0,06= volume of the animal blood that corresponds to 6% of its weight, and
3.35 = concentration of iron in hemoglobin (mg Fe/g Hb).

A control group was kept with eight swines, and these animals had received the regular dose of 200 mg Fe as soon as they were born, in the form of iron-dextran, and the feed at a concentration of 100 mg Fe/kg feed.

For the hemoglobin recovery, after the regrouping, each group was submitted to a different iron repletion diet for 13 days, using $FeSO_4.7H_2O$ (Standard) or $FeSO_4.H_2O.ALG$. The experimental groups had been assigned as GROUP 1: PFe 150 TOTAL Fe 150 mg Fe/kg diet as $FeSO_4.7H_2O$ and GROUP 2: 2 CPS $FeSO_4.H_2O.ALG$ -150 mg Fe/kg diet.

The feed was analyzed as the centesimal composition according to the regulations set out by "Instituto Adolph Lutz" and AOAC. The concentration of Fe was determined by EAA after the samples were opened with $HNO_3:H_2O2$.

The monitoring of the Fe absorption by the animals was performed through the collection of blood and determining the concentration of hemoglobin. The determination of the iron bioavailability was calculated from the relationship between the variation of iron pool and the iron ingested by the animals through the enriched feed. The animals were weighed and had their blood collected on days 0, 3, 6, 9 and 13 of the repletion analysis. In this same period, the food consumption was measured once a day, always in the morning period. The value of the iron bioavailability in the feed was calculated based on its consumption by the swines. The results obtained are given in Table 10, showing that the product $FeSO_4.H_2O.ALG$ provided the same percentage of iron absorption than $FeSO_4.7H_2O$ used as a reference.

TABLE 10 - Determination of the iron bioavailability (absorption)

| Treatment | % absorption |
|---|---|
| $FeSO_4.H_2O.ALG$ | $15.1 \pm 3.8$ |
| $FeSO_4.7H_2O$ | $15.3 \pm 4.2$ |

**Claims**

1. An iron source product for fortifying dehydrated food stuff, **characterized in that** it comprises a bioavailable iron salt core, in special a mono-hydrated ferrous sulphate core, coated with at least an alginate layer.

2. The iron source product according to claim 1, wherein the bioavailable iron salt that constitutes the core is a bioavailable water-soluble iron compound, including ferrous gluconate, ferrous lactate, or acid-soluble iron compound, including ferrous fumarate and ferrous succinate.

3. The iron source product according to claim 1, wherein hydrated ferrous sulphate constitutes the core.

4. The iron source product according to claim 1, wherein the alginate layer that coats the iron salt core is present in an amount of from 0.5 to 10% by weight.

5. The iron source product according to claim 1, wherein the layer that wraps the ferrous sulphate core or another iron salt is provided with one or more layers of polycations or synthetic polymers that wrap the alginate layers.

6. The iron source product according to claim 1 and 5, wherein the layers of polycations or synthetic polymers are chitosan, polyethylamine and poly-L-Lysine.

7. Wheat flour, cereal or food stuff comprising an iron source product according to any one of claims 1-6.

8. A method for the preparation of an iron source product as defined in claim 1, **characterized in that** the method comprises :

   the first step of deposition of a sodium or potassium alginate layer onto the surface of a bioavailable iron salt core, in special a mono-hydrated ferrous sulphate core,
   optionally followed by successive steps of drying, deposing or not of a film of polycations or synthetic polymers and drying and deposing a new alginate layer, and drying.

9. A method according to claim 8, wherein the deposition of the alginate layer(s), and optionally of a film of polycations or synthetic polymers, is carried out by a method for coating solid particles.

10. A method according to claims 8 or 9, wherein the deposition of the alginate layer(s), and optionally of a film of polycations or synthetic polymers, is carried out by spraying the solution through a spraying nozzle onto bioavailable iron salt core kept under agitation in an equipment for agitating solids.

11. A method according to claim 10, wherein the equipment for agitating solids is a fluidized bed.

12. A method according to claim 8, wherein the concentrations of the solutions of both alginate and polycations or synthetic polymers are lower than 3% by weight.

13. A method according to claim 8, wherein the solutions of polycations or synthetic polymers are prepared by dissolving the same in water and setting the pH of the solution between 2 and 6 with an acid.

**14.** A method according to claim 13, wherein said acid is a synthetic solution of acetic acid.

**15.** A method according to claim 8, wherein the drying of the solutions of alginate and polycations or synthetic polymers is carried out in the air at room temperature or under controlled conditions wherein the temperature ranges between 30˚C and 160˚C.

**16.** A method according to claim 8 or 15, wherein the drying of the solutions of alginate and polycations or synthetic polymers is carried out in a fluidized bed for 40 to 360 seconds at temperatures between 60 and 130˚C.

**17.** A method according to claim 8, wherein the grain size of the obtained ferrous sulfate-based product is controlled by reducing the grain size by milling the product, after the drying step between a spraying step and the next or by simply classifying the grain size of the product through screening, in order to eliminate coarse grains that shall be milled or discarded later on.

**Patentansprüche**

**1.** Eisenursprungsprodukt zum Anreichern dehydrierter Lebensmittel, **dadurch gekennzeichnet, dass** es einen bioverfügbaren Eisensalzkern umfasst, insbesondere einen monohydrierten Eisensulfatkern, der mit wenigstens einer Alginatschicht beschichtet ist.

**2.** Eisenursprungsprodukt nach Anspruch 1, wobei es sich bei dem bioverfügbaren Salz, das den Kern bildet, um eine bioverfügbare wasserlösliche Eisenzusammensetzung, einschließlich Eisengluconat, Eisenlactat oder eine säurelösliche Eisenzusammensetzung, einschließlich Eisenfumarat und Eisensuccinat, handelt.

**3.** Eisenursprungsprodukt nach Anspruch 1, wobei der Kern aus hydriertem Eisensulfat gebildet ist.

**4.** Eisenursprungsprodukt nach Anspruch 1, wobei die Aligantschicht, die den Eisensalzkern beschichtet, in einer Menge von 0,5 bis 10 Gew.-% vorhanden ist.

**5.** Eisenursprungsprodukt nach Anspruch 1, wobei die Schicht, die den Eisensulfatkern oder ein anderes Eisensalz umgibt, mit einer oder mehr Schichten aus Polykationen oder synthetischen Polymeren bereitgestellt ist, die die Alginatschichten umgeben.

**6.** Eisenursprungsprodukt nach Anspruch 1 und 5, wobei es sich bei den Schichten aus Polykationen oder synthetischen Polymeren um Chitosan, Polyethylamin und Poly-L-Lysin handelt.

**7.** Weizenmehl, Getreide oder Lebensmittel, umfassend ein Eisenursprungsprodukt nach einem der Ansprüche 1 - 6.

**8.** Verfahren zur Herstellung eines nach Anspruch 1 definierten Eisenursprungsprodukts, **dadurch gekennzeichnet, dass** das Verfahren Folgendes umfasst:

einen ersten Schritt der Abscheidung einer Natrium- oder Kaliumalginatschicht auf der Oberfläche eines bioverfügbaren Eisensalzkerns, insbesondere eines monohydrierten Eisensulfatkerns,
wahlweise gefolgt durch die aufeinanderfolgenden Schritte des Trocknens, des Auftragens, oder auch nicht, einer Folie aus Polykationen oder synthetischen Polymeren und des Trocknens und Auftragens einer neuen Alginatschicht und des Trocknens.

**9.** Verfahren nach Anspruch 8, wobei die Abscheidung der Alginatschicht(en) und wahlweise einer Folie aus Polykationen oder synthetischen Polymeren mittels eines Verfahrens für die Beschichtung von Feststoffen ausgeführt wird.

**10.** Verfahren nach Anspruch 8 oder 9, wobei die Abscheidung der Alginatschicht(en) und wahlweise einer Folie aus Polykationen oder synthetischen Polymeren mittels Aufsprühen der Lösung durch eine Sprühdose auf den bioverfügbaren Eisensalzkern unter Rühren in einem Apparat für Rührfeststoffe ausgeführt wird.

**11.** Verfahren nach Anspruch 10, wobei es sich bei dem Apparat für Rührfeststoffe um ein Fließbett handelt.

**12.** Verfahren nach Anspruch 8, wobei die Konzentrationen der Lösungen sowohl des Alginats als auch der Polykationen oder der synthetischen Polymere niedriger als 3 Gew.-% sind.

**13.** Verfahren nach Anspruch 8, wobei die Lösungen der Polykationen oder der synthetischen Polymere durch Auflösen derselben in Wasser und Einstellen des pH-Werts der Lösung zwischen 2 und 6 mit einer Säure hergestellt werden.

**14.** Verfahren nach Anspruch 13, wobei es sich bei der genannten Säure um eine synthetische Lösung aus Essigsäure handelt.

**15.** Verfahren nach Anspruch 8, wobei das Trocknen der Lösungen aus Alginat und Polykationen oder synthetischen Polymeren an der Luft bei Raumtemperatur oder unter kontrollierten Konditionen ausgeführt wird, wobei die Temperatur in einem Bereich von zwischen 30 ˚C und 160 ˚C liegt.

**16.** Verfahren nach Anspruch 8 oder 15, wobei das Trocknen der Lösungen aus Alginat und Polykationen oder synthetischen Polymeren 40 bis 360 Sekunden lang in einem Fließbett bei Temperaturen von zwischen 60 und 130 ˚C ausgeführt wird.

**17.** Verfahren nach Anspruch 8, wobei die Korngröße des erhaltenen Produktes auf Eisensulfatbasis durch Reduzieren der Körngrößen mittels Mahlen des Produktes nach dem Trocknungsschritt zwischen einem Sprühschritt und dem nächsten Schritt oder einfach durch Klassifizieren der Korngröße des Produktes durch ein Sieb, kontrolliert wird, um die groben Körnern zu eliminieren, die später gemahlen oder verworfen werden sollen.

## Revendications

**1.** Produit source de fer pour renforcer un produit alimentaire déshydraté, **caractérisé en ce qu'**il comprend un coeur de sel de fer biodisponible, en particulier un coeur de sulfate ferreux monohydraté, enrobé avec au moins une couche d'alginate.

**2.** Produit source de fer selon la revendication 1, dans lequel le sel de fer biodisponible qui constitue le coeur est un composé de fer hydrosoluble biodisponible, comprenant le gluconate ferreux, le lactate ferreux, ou un composé de fer acido-soluble, comprenant le fumarate ferreux et le succinate ferreux.

**3.** Produit source de fer selon la revendication 1, dans lequel le sulfate ferreux hydraté constitue le coeur.

**4.** Produit source de fer selon la revendication 1, dans lequel la couche d'alginate qui enrobe le coeur de sel de fer est présente en une quantité de 0,5 à 10 % en poids.

**5.** Produit source de fer selon la revendication 1, dans lequel la couche qui entoure le coeur de sulfate ferreux ou un autre sel de fer est pourvue d'une ou de plusieurs couches de polycations ou de polymères synthétiques qui entourent les couches d'alginate.

**6.** Produit source de fer selon les revendications 1 et 5, dans lequel les couches de polycations ou de polymères synthétiques sont le chitosane, la polyéthylamine et la poly-L-lysine.

**7.** Farine de blé, céréale ou produit alimentaire comprenant un produit source de fer selon l'une quelconque des revendications 1 à 6.

**8.** Procédé de préparation d'un produit source de fer tel que défini dans la revendication 1, **caractérisé en ce que** le procédé comprend :

la première étape de dépôt d'une couche d'alginate de sodium ou de potassium sur la surface d'un coeur de sel de fer biodisponible, en particulier un coeur de sulfate ferreux monohydraté, facultativement suivie par les étapes successives de séchage, dépôt ou non d'un film de polycations ou de polymères synthétiques et séchage et dépôt d'une nouvelle couche d'alginate, et séchage.

**9.** Procédé selon la revendication 8, dans lequel le dépôt de la couche d'alginate ou des couches d'alginate, et facultativement d'un film de polycations ou de polymères synthétiques, est réalisé par un procédé d'enrobage de particules solides.

**10.** Procédé selon la revendication 8 ou 9, dans lequel le dépôt de la couche d'alginate ou des couches d'alginate, et facultativement d'un film de polycations ou de polymères synthétiques, est réalisé par pulvérisation de la solution à travers un gicleur sur le coeur de sel de fer biodisponible maintenu sous agitation dans un équipement pour l'agitation des solides.

**11.** Procédé selon la revendication 10, dans lequel l'équipement permettant l'agitation des solides est un lit fluidisé.

**12.** Procédé selon la revendication 8, dans lequel les concentrations des solutions d'alginate et de polycations ou de polymères synthétiques sont inférieures à 3 % en poids.

**13.** Procédé selon la revendication 8, dans lequel les solutions de polycations ou de polymères synthétiques sont préparées en les dissolvant dans de l'eau et en fixant le pH de la solution entre 2 et 6 avec un acide.

**14.** Procédé selon la revendication 13, dans lequel ledit acide est une solution synthétique d'acide acétique.

**15.** Procédé selon la revendication 8, dans lequel le séchage des solutions d'alginate et de polycations ou de polymères synthétiques est réalisé à l'air à température ambiante ou dans des conditions contrôlées dans lesquelles la température se situe entre 30 ˚C et 160 ˚C.

**16.** Procédé selon la revendication 8 ou 15, dans lequel le séchage des solutions d'alginate et de polycations ou de polymères synthétiques est réalisé dans un lit fluidisé pendant 40 à 360 secondes à des températures entre 60 et 130 ˚C.

**17.** Procédé selon la revendication 8, dans lequel la grosseur de grain du produit à base de sulfate ferreux obtenu est contrôlée en réduisant la grosseur de grain par broyage du produit, après l'étape de séchage entre une étape de pulvérisation et la suivante ou en classant simplement la grosseur de grain du produit par tamisage, afin d'éliminer les gros grains qui seront broyés ou mis au rebut par la suite.

**FeSO₄ .H₂O**

Time under water = 0 seconds

**FeSO₄ .H₂O ALG**

Time under water = 0 seconds

Time under water = 120 seconds

Time under water = 120 seconds

Time under water = 300 seconds

Time under water = 300 seconds

Time under water = 3600 seconds

Fully solubilized product after 300 seconds

FIGURE 1

FIGURE 2

FIGURE 3

$$G(^{1}C_4) \xrightarrow{\alpha 1,4} G(^{1}C_4) \xrightarrow{\alpha 1,4} M(^{4}C_1) \xrightarrow{\beta 1,4} M(^{4}C_1) \xrightarrow{\beta 1,4} G(^{1}C_4)$$

FIGURE 4

**FeSO₄ .H₂O ALG**

Time under water = 0 seconds

Time under water = 120 seconds

Time under water = 300 seconds

Time under water = 3600 seconds

**FeSO₄ .H₂O ALG.QUITOSANE**

Time under water = 0 seconds

Time under water = 120 seconds

Time under water = 300 seconds

Time under water = 3600 seconds

FIGURE 5

FIGURE 6

1. CREAM COLOR
20. LOSS OF QUALITY
19. DEGREE OF DIFFERENCE
18. STRANGE FLAVOR
17. METAL FLAVOR
16. OXIDIZED/RANCID FLAVOR*
15. MOLDY/OLD FLAVOR*
14. SOUR FLAVOR
13. FLAVOR CHARACTERISTIC OF FRESH BREAD*
12. ADHERENCE
11. SOFTNESS (oral)
2. SIZE OF CELLS
3. ODOR CHARACTERISTIC OF FRESH BREAD*
4. ACIDIC ODOR
5. MOLDY/OLD ODOR*
6. OXIDIZED/RANCID ODOR
7. SOFTNESS (non-oral)
8. ELASTICITY
9. HUMIDITY
10. PRESENCE OF CLUMPS

— · ■ — · Before storage (day "0")   · · · ● · · · After 180 days at 25°C   — · △ — · After 180 days at 35°C

FIGURE 7

27

FIGURE 8

FIGURE 9

FIGURE 10

## REFERENCES CITED IN THE DESCRIPTION

**Patent documents cited in the description**

- US 3803292 A
- US 3876813 A

- US 4931292 A

**Non-patent literature cited in the description**

- **COOK et al.** Absorption of fortification iron in bread. *American Journal of Clinical Nutrition,* 1973, vol. 26, 861-872